# FASCICULE DE BREVET EUROPEEN

(11) **EP 3 785 403 B1**
(45) Date de publication et mention de la délivrance du brevet: **12.01.2022**
(21) Numéro de dépôt: 19726048.2
(22) Date de dépôt: 10.04.2019
(51) Int. Cl.: H04L 12/26, H04L 29/06

(54) **PROCÉDÉ D'ÉLABORATION DE DONNÉES D'UTILISATION DE RELAIS UTILISÉS AU COURS D'UNE COMMUNICATION ENTRE DEUX APPAREILS, DE RECHERCHE DESDITES DONNÉES, ET APPAREILS ASSOCIÉS**
VERFAHREN ZUR FORMULIERUNG VON NUTZUNGSDATEN BEZÜGLICH EINES RELAIS IM ZUGE EINER KOMMUNIKATION ZWISCHEN ZWEI GERÄTEN, ZUM SUCHEN DER DATEN UND ZUGEHÖRIGE VORRICHTUNGEN
METHOD FOR FORMULATING USAGE DATA IN RESPECT OF RELAYS USED IN THE COURSE OF A COMMUNICATION BETWEEN TWO DEVICES, FOR SEARCHING SAID DATA, AND ASSOCIATED DEVICES

(30) Priorité: 23.04.2018 FR 1853531
(43) Date de publication de la demande: 03.03.2021
(73) Titulaire: ORANGE, 92130 Issy-les-Moulineaux (FR)
(72) Inventeur: MESSIÉ, Vincent, 92326 CHÂTILLON CEDEX (FR); FROMENTOUX, Gaël, 92326 CHÂTILLON CEDEX (FR); OMNES, Nathalie, 92326 CHÂTILLON CEDEX (FR)
(74) Mandataire: Vidon Brevets & Stratégie
(86) Numéro de dépôt international: PCT/FR2019/050844
(87) Numéro de publication internationale: WO 2019/207231

(56) Documents cités:
- US-A1- 2018 013 570

## Description

### 1. Domaine de l'invention

Le domaine de l'invention est celui des réseaux de communication, et plus particulièrement ceux disposant de relais permettant d'acheminer des messages entre un appareil source et un appareil destinataire.

Plus précisément, la présente invention permet de déterminer la quantité de trafic des données qui passent à travers ces relais lors des communications et de produire des preuves d'utilisation de ces relais.

La présente invention trouve notamment des applications dans les domaines de l'optimisation de l'architecture des réseaux, et de la facturation des services.

### 2. Art antérieur

Les réseaux informatiques permettent de faire communiquer plusieurs interlocuteurs. Certains réseaux assurent en plus l'anonymat des communications. Parmi ceux-ci, on peut citer le réseau TOR (également connu sous le nom « Darknet ») dont le protocole comporte plusieurs niveaux de chiffrement et de déchiffrement, à travers différents relais. Ces relais assurent à la fois les échanges d'informations et masquent la source des données, garantissant ainsi l'anonymat des communications.

Selon les besoins d'acheminement des communications, certains relais du réseau peuvent être plus ou moins occupés. Afin de densifier au mieux les réseaux, tout en optimisant la position des relais, il est important de connaître le niveau d'occupation de ces appareils afin de vérifier partout une bonne disponibilité des appareils. Cette disponibilité s'évalue notamment en estimant la bande passante. Pour cela, une requête de preuve de connectivité est émise grâce à un paquet de données spécifique échangé au sein d'un circuit à une fréquence déterminée lors de la création du circuit de communication, générant un échange de primitives cryptographiques entre les différents relais. Ce mécanisme de consensus permet de fournir des « preuves de bande passante » ou « Proof of Bandwidth », PoB en abrégé.

Ce mécanisme de PoB tel que défini par le standard Torcoin repose sur l'utilisation du réseau TOR. Dans ce réseau, la création des circuits est réalisé par un groupe de consensus : les serveurs de confiance (ou « assignment servers » en langue anglo-saxonne). Ces tiers de confiances ont pour rôle de créer les circuits Tor en mélangeant tous les clients et les relais, augmentant considérablement la robustesse du système face à la présence de relais malveillants. Grâce à ce mécanisme, si la moitié des nœuds sont corrompus, un seizième des circuits le sont. La production de PoB selon le standard Torcoin permet de déterminer le taux d'utilisation d'un relais en évaluant la bande passante (c'est à dire le débit) fournie par le relais qui est utilisée par des clients et ainsi définir précisément son utilité dans le réseau, pour ainsi le rétribuer en fonction de cette dernière. S'il s'avère que peu de bande passante transite par un relais, on peut remettre en cause son existence dans le réseau. Cette évaluation s'effectue au moyen de primitives cryptographiques (qui garantissent notamment l'authenticité et l'anonymat) et de preuves de bande passante échangées régulièrement. Puisque la fréquence de ces trames est connue, cet outil permet de tracer précisément l'utilisation d'un circuit.

Cette solution garantit l'anonymat mais ne permet pas de déterminer la quantité de trafic écoulé par les relais, car cela leur imposerait de se faire connaitre, ce qui serait contraire au principe fondateur de ce réseau. De plus, dans le cas de la PoB, le mécanisme de consensus entraîne d'importantes contraintes pour prévenir la fraude en nécessitant la présence de tiers de confiance représentés par les « assignment servers ».

Il existe donc un réel besoin d'une nouvelle solution de comptage certifié par les deux extrémités à base de DLT (Distributed Ledger Technology - blockchain) basé sur une preuve permettant de mesurer l'utilisation de relais. Ce système est particulièrement adapté à la densification des réseaux d'accès et l'amélioration de leur capillarité.

Il existe donc un besoin pour une nouvelle solution pour mesurer l'utilisation de relais dans un circuit de communication ne présentant pas ces inconvénients de l'art antérieur.

Le document US 2018/013570 A1 enseigne à vérifier les identités des relais sur un circuit de communication. La communication comprend des données et des signatures numériques, et chacune des signatures numériques peut être générée sur la base d'au moins les données. Les signatures numériques comprennent une signature numérique associée à l'appareil source et aux relais intermédiaires sur un circuit de communication. Les signatures numériques sont utilisées pour vérifier si les relais forment une route attendue pour la communication.

### 3. Exposé de l'invention

Un objet de la présente invention est de proposer une solution pour calculer la quantité de données et/ou le nombre de communications établies entre les deux appareils aux extrémités d'une connexion.

Pour cela, il est proposé un procédé d'élaboration de données d'utilisation d'un relais mis en œuvre dans un réseau informatique comprenant au moins un appareil source, un appareil destinataire et au moins un relais constituant un circuit pour établir une communication entre l'appareil source et l'appareil destinataire. Le procédé comprend les étapes suivantes mises en œuvre au niveau de l'appareil source :
- récupération des identifiants des relais constituant ledit circuit,
- émission d'une trame dite « PoU » à destination de l'appareil destinataire, chaque relais du circuit ajoutant au passage dans la trame PoU une signature réalisée à partir d'un challenge et d'une clef propre audit relais,
- récupération en retour de ladite trame PoU d'au moins les signatures de chaque relais,
- vérification des signatures reçues en utilisant les clefs publiques des relais dudit circuit, l'authentification des signatures déclenchant les étapes suivantes :
   - élaboration à partir des données reçues d'une liste ordonnée d'identifiants des relais utilisés pour établir ladite communication,
   - émission de trames de transactions à destination de chaque relais identifié dans ladite liste pour générer des preuves d'utilisation comportant au moins les signatures contenues dans la trame PoU, les trames de transactions étant conçues pour déclencher l'émission par chaque relais d'une preuve d'utilisation enregistrée dans une mémoire partagée.

De cette manière et selon les besoins d'acheminement des communications, certains relais du réseau peuvent être plus ou moins occupés. Afin de densifier au mieux les réseaux, en optimisant la position des relais, il est important de connaître le niveau d'occupation de ces appareils afin de fournir partout une bonne disponibilité des appareils. Cette disponibilité s'évalue notamment en calculant la quantité de données et/ou le nombre de communications établies entre les deux appareils aux extrémités d'une connexion.

Selon un mode de réalisation particulier, consécutivement à la récupération des identifiants des relais, l'appareil source compare les identifiants reçus au contenu d'une liste noire d'appareils, la présence d'un identifiant de relais dans ladite liste noire stoppant la communication entre l'appareil source et l'appareil destinataire et déclenchant une nouvelle étape de détermination d'un circuit ne passant pas par le relais identifié.

Selon un mode de réalisation particulier, la trame PoU est émise par l'appareil source à intervalle de temps régulier. De cette manière, les preuves d'utilisation sont générées régulièrement, permettant ainsi d'évaluer le travail effectif de chaque relais.

Selon un mode de réalisation particulier, la trame PoU est émise par l'appareil source chaque fois que la quantité de données échangées avec l'appareil destinataire depuis la dernière émission de la trame PoU dépasse une quantité déterminée de données. De cette manière, les preuves d'utilisation sont générées chaque fois qu'une certaine quantité de données est transmise, permettant ainsi d'évaluer le travail effectif de chaque relais.

Selon un mode de réalisation particulier, la trame PoU émise par l'appareil source comporte la valeur du challenge utilisée par les relais pour calculer les signatures à l'aide de leurs clefs secrètes. De cette manière, les preuves d'utilisation sont personnalisées avec un élément appartenant à l'appareil qui est à l'origine des communications.

Il est également proposé un procédé d'enregistrement de données d'utilisation d'un relais mis en œuvre dans un réseau informatique comprenant au moins un appareil source, un appareil destinataire et au moins un relais constituant un circuit pour établir une communication entre l'appareil source et l'appareil destinataire. Le procédé comprend notamment les étapes suivantes mises en œuvre au niveau d'un relais :
- émission vers l'appareil source de l'identifiant du relais,
- réception d'une trame dite « PoU » en provenance de l'appareil source ou du relais précédent au sein du circuit,
- calcul d'une signature à partir d'un challenge et d'une clef propre au dit relais,
- rajout d'au moins cette signature à la trame PoU et transmission de la trame PoU à l'appareil destinataire ou au relais présent sur le circuit en direction de l'appareil destinataire, suivant la position du relais dans ledit circuit,
- réception d'au moins une trame de transactions en provenance de l'appareil source ou de l'appareil destinataire, la trame de transaction comportant au moins les signatures des relais contenues dans la trame PoU,
- émission consécutivement à la réception de chaque transaction d'une requête d'enregistrement dans une mémoire partagée une preuve d'utilisation de ce relais comportant au moins les signatures des relais du circuit.

Selon un mode de réalisation particulier, le procédé comporte une étape de réception d'une trame dite « retour de PoU » en provenance de l'appareil destinataire contenant au moins l'ensemble des identifiants de la trame PoU reçue, une étape de transmission de ladite trame reçue vers l'appareil source, et une étape ultérieure de réception en provenance de l'appareil source d'une trame de transactions déclenchant la génération d'une preuve d'utilisation du relais.

De cette manière, l'enregistrement de preuves d'utilisation peut être déclenché par l'appareil source de la communication et par l'appareil destinataire de cette communication.

Selon un mode de réalisation particulier, le relais reçoit de la mémoire partagée un message de retour indiquant que l'enregistrement s'est correctement effectué, une absence du message de retour pendant une durée déterminée après l'envoi déclenche la suppression du circuit de communication.

De cette manière, le relais est assuré que la preuve d'utilisation est bien enregistrée.

Selon un mode de réalisation particulier, les identifiants des relais comportent une valeur de clef publique caractéristique à chaque relais.

Selon un mode de réalisation particulier, le relais fournit un certificat produit à partir de la clef secrète associée à sa clef publique, ledit certificat étant ajouté dans la trame PoU, le relais vérifiant le certificat émis par un relais à l'aide d'un calcul cryptographique faisant intervenir ladite clef publique.

Selon un mode de réalisation particulier, le certificat associé à un relais est généré à partir d'un nombre aléatoire. De cette manière, la sécurité de la preuve d'utilisation est renforcée.

Selon un mode de réalisation particulier, la trame PoU reçue comporte la valeur du challenge utilisée par le relais pour calculer la signature à l'aide de la clef secrète du relais. De cette manière, les preuves d'utilisation sont personnalisées avec un élément appartenant à l'appareil qui est à l'origine des communications.

Il est également proposé un procédé d'élaboration de données d'utilisation d'un relais mis en œuvre dans un réseau informatique comprenant au moins un appareil source, un appareil destinataire et au moins un relais constituant un circuit pour établir une communication entre l'appareil source et l'appareil destinataire, comprenant les étapes suivantes mises en œuvre au niveau de l'appareil destinataire :
- réception de l'identifiant d'au moins un relais présent sur le circuit,
- réception d'une trame dite « PoU » en provenance de l'appareil source et contenant au moins une signature réalisée par un relais à partir d'un challenge et d'une clef propre audit relais,
- vérification des signatures reçues en utilisant les clefs publiques des relais dudit circuit, l'authentification des signatures déclenchant les étapes suivantes :
   - élaboration à partir des données reçues d'une liste ordonnée d'identifiants des relais utilisés pour établir ladite communication,
   - émission de trames de transactions à destination de chaque relais identifié dans ladite liste pour générer des preuves d'utilisation de ces relais comportant au moins les signatures contenues dans la trame PoU, les trames de transactions étant conçues pour déclencher l'émission par chaque relais d'une preuve d'utilisation enregistrée dans une mémoire partagée.

Selon un mode de réalisation particulier, le procédé comporte en outre une étape d'élaboration d'une trame de données dite « retour de PoU » comportant les certificats et les identifiants d'au moins tous les relais du circuit, et une étape d'émission vers l'appareil source de ladite trame retour de PoU, avec la signature réalisée à l'aide d'une clef de l'appareil destinataire.

Il est également proposé un appareil source destiné à entrer en communication avec un appareil destinataire à travers un circuit comportant au moins un relais et appartenant à un réseau informatique comportant une mémoire partagée, ledit appareil comportant un moyen de communication récupérant les identifiants des relais constituant ledit circuit et émettant une première trame dite « PoU » à destination de l'appareil destinataire, ladite trame étant destiné à récupérer au passage de chaque relais une signature réalisée à partir d'un challenge et d'une clef propre audit relais , un moyen de vérification des signatures récupérées en utilisant les clefs publiques des relais dudit circuit, l'authentification des signatures par le moyen de vérification déclenchant l'émission par le moyen de communication de trames de transactions à destination de chaque relais identifié dans ledit circuit, lesdites trames de transactions comportant au moins les signatures contenues dans la trame PoU et déclenchant lors de leur réception par chaque relais l'émission d'une requête d'enregistrement d'une preuve d'utilisation vers une mémoire partagée.

Il est également proposé un appareil relais destiné à établir une communication entre un appareil source et un appareil destinataire à travers un circuit comportant au moins ledit relais et appartenant à un réseau informatique comportant une mémoire partagée, ledit appareil relais comportant un moyen de communication recevant en provenance de l'appareil source une trame dite « PoU », et un moyen de calcul d'une signature à partir d'un challenge et d'une clef propre audit relais, ledit moyen de communication émettant vers l'appareil destinataire ou du relais présent dans le circuit en direction de l'appareil destinataire ladite trame PoU en y rajoutant au moins sa signature calculée, ledit moyen de communication recevant ultérieurement en provenance de l'appareil source ou de l'appareil destinataire au moins une trame de transactions comportant au moins les signatures des relais contenues dans la trame PoU, ledit moyen de communication émettant consécutivement à la réception de chaque transaction une requête d'enregistrement dans une mémoire partagée d'une preuve d'utilisation de ce relais comportant au moins les signatures des relais du circuit.

Il est également proposé un appareil destinataire destiné à recevoir une communication d'un appareil source à travers un circuit comportant au moins un relais et appartenant à un réseau informatique comportant une mémoire partagée, ledit appareil destinataire comportant un moyen de communication recevant une trame dite « PoU » en provenance de l'appareil source et contenant au moins une signature réalisée à partir d'un challenge et d'une clef propre à au moins un relais du circuit, un moyen de vérification des signatures de la trame PoU en utilisant les clefs publiques des relais dudit circuit, l'authentification des signatures par le moyen de vérification déclenchant l'émission par le moyen de communication de trames de transactions à destination de chaque relais identifié dans ledit circuit pour générer des preuves d'utilisation de ces relais, les trames de transactions comportant au moins les signatures contenues dans la trame PoU étant conçues pour déclencher l'émission par chaque relais d'une preuve d'utilisation enregistrée dans une mémoire partagée.

Un autre aspect concerne un ou plusieurs programmes d'ordinateur comportant des instructions pour la mise en œuvre d'un procédé d'élaboration de données d'utilisation d'un relais tel(s) que décrit(s) ci-dessus lorsque ce ou ces programmes sont exécutés par au moins un processeur.

Selon encore un autre aspect, il est proposé un ou plusieurs supports d'enregistrement non transitoire lisibles par un ordinateur, et comportant des instructions d'un ou plusieurs programmes d'ordinateur comprenant des instructions pour la mise en œuvre d'un procédé d'élaboration de données d'utilisation d'un relais tel(s) que décrit(s) ci-dessus.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 représente un réseau informatique comportant les différents dispositifs proposés pour le procédé d'élaboration de données d'utilisation selon un mode de réalisation ;
- la figure 2 illustre les différents composants d'un relais de communication selon un mode de réalisation ;
- la figure 3 illustre l'établissement d'un circuit en vue d'établir une communication entre deux appareils selon un mode de réalisation ;
- la figure 4 illustre les différentes communications sur un circuit en vue d'établir des preuves d'utilisations des relais d'un circuit connectant deux appareils selon un mode de réalisation ;
- la figure 5 illustre les différentes communications sur un circuit pour enregistrer des preuves d'utilisations d'un relais dans une mémoire partagé selon un mode de réalisation ;
- la figure 6 présente un exemple d'ordinogramme des étapes d'un procédé d'établissement de connexions exécuté au niveau d'un premier relais ;
- la figure 7 présente un exemple d'ordinogramme des étapes d'un procédé d'établissement de connexions exécuté au niveau du relais suivant ;
- la figure 8 présente un exemple d'ordinogramme des étapes pour la génération d'une trame PoU au niveau d'un appareil client ;
- la figure 9 présente un exemple d'ordinogramme des étapes pour le traitement de transactions au niveau d'un relais ;
- la figure 10 présente un exemple d'ordinogramme des étapes pour le traitement d'une requête PoU par l'appareil destinataire ;

### 5. Description d'un mode de réalisation

La solution proposée permet de générer des preuves d'utilisation d'un relais dans un réseau informatique.

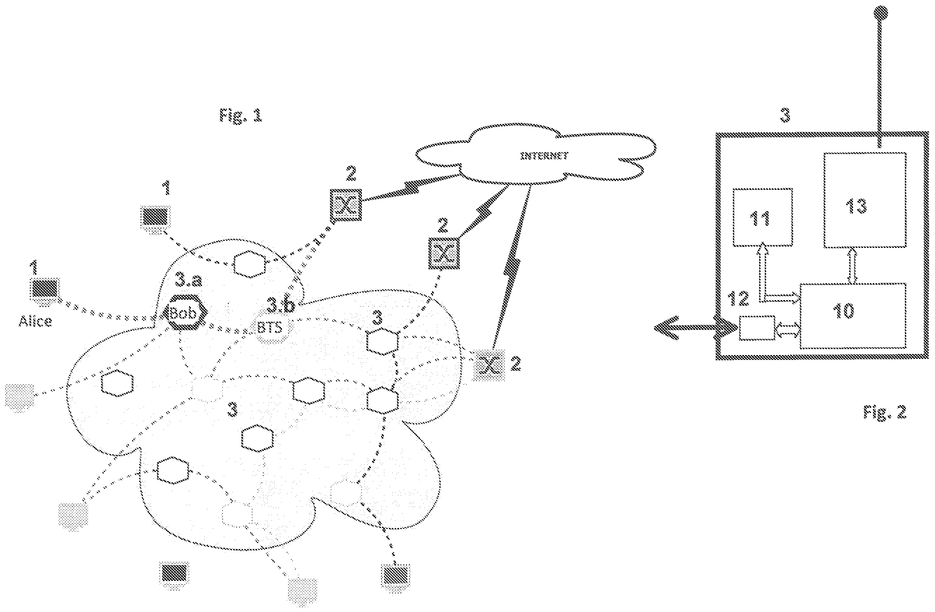

La **Fig.1** représente un réseau informatique comportant différents dispositifs permettant de transmettre des données, selon un mode de réalisation. En plus de la transmission de données, ce réseau assure l'anonymat des communications. Parmi de tels réseaux, on peut citer le réseau TOR, également connu sous le nom « Darknet ». Les transmissions de données sont chiffrées pour masquer leurs sources ce qui assure l'anonymat des communications. L'invention est mise en œuvre lorsqu'un appareil source 1 communique avec un appareil destinataire 2, à travers des relais 3. Les relais sont typiquement des décodeurs (box), des cellules 4G, ou des femto cellules (µ/fCell).

Selon un exemple de réalisation, l'appareil source 1 appartient à un client, que nous appellerons « Alice » dans la suite du document. Alice veut entrer en communication avec sa passerelle 2 (ou « Gateway» en langue anglo-saxonne, GtW en abrégé). Les différents appareils peuvent appartenir à des opérateurs différents, par exemple Alice est un client de l'opérateur dit « Bleu », et entre en communication avec un premier relais 3.a appartenant à un opérateur dit « Rouge », puis une BTS 3.b appartenant à un opérateur dit « Vert » pour atteindre enfin la passerelle de l'opérateur Bleu. A partir de cette passerelle, Alice a accès à des réseaux distants, et notamment le réseau Internet. Le circuit de communication entre Alice et sa passerelle GtW, appelé également circuit de communication, ou simplement circuit, passe donc par les relais 3.a et 3.b, le fait de passer à travers deux relais n'est qu'un exemple, il est bien entendu qu'un circuit entre un appareil source 1 et un appareil destinataire 2 peut comprendre un nombre quelconque de relais. La façon de définir ce circuit fait appel à des techniques de routage bien connues qu'il est inutile de décrire ici. Le procédé intervient pour produire des preuves d'utilisation de relais (ou « Proof Of Use» en langue anglo-saxonne, PoU en abrégé).

Le procédé d'élaboration de preuves données d'utilisation peut être implémenté au sein d'un réseau utilisant des applications décentralisées, une application P2P (abréviation de « Peer to Peer », ou pair à pair en français) pouvant être implémentée sur n'importe quel réseau de pairs, permettant de faire fonctionner une plateforme de connectivité communautaire (WIFI communautaire, roaming 4G, 5G, ...) sans médiateur, en utilisant une mémoire partagée pour stocker l'historique des évènements. En incorporant ce procédé, l'utilisation précise d'un circuit par un utilisateur et la bande passante (c'est à dire le débit) offerte par chaque relais de ce circuit à un utilisateur particulier peuvent être déterminées. En analysant l'utilisation au fil du temps d'un relais, une décision peut être prise sur son maintien ou sa suppression.

La **Fig. 2** illustre les différents composants d'un relais de communication selon un mode de réalisation. Les relais 3 comportent typiquement une unité centrale 10 capable d'exécuter un programme enregistré dans une mémoire 11, et d'un port de communication filaire 12, utilisant Ethernet par exemple, pour communiquer avec une passerelle ou d'autres relais. Cette liaison autorise la communication entre un appareil source 1 et un appareil destinataire 2. Selon un mode particulier de réalisation, le relais 3 dispose d'un module de communication radio 13 à longue portée (réseau GSM) et/ou à courte portée (Wifi, Bluetooth, ...). Un schéma analogue peut illustrer les différents composants d'un appareil source 1, et ou d'un appareil destinataire 2.

Après avoir détaillé sous la forme d'un exemple les différents appareils mettant en œuvre l'invention, nous allons maintenant expliciter comment ceux-ci coopèrent.

Dans un premier temps, l'appareil source 1 établit une communication avec un appareil destinataire 2, par la mise en œuvre d'un chemin, appelé par la suite un circuit déterminé par une liste des appareils qui transmettent les données de la communication. Ensuite, l'appareil source 1 utilise le circuit ainsi établi pour émettre des requêtes afin d'enregistrer des preuves d'utilisation de chacun de ces appareils dans une mémoire partagée. Cette mémoire partagée appelée « *Ledger* » en langue anglo-saxonne, est accessible par n'importe quel appareil du réseau informatique, et notamment par les relais.

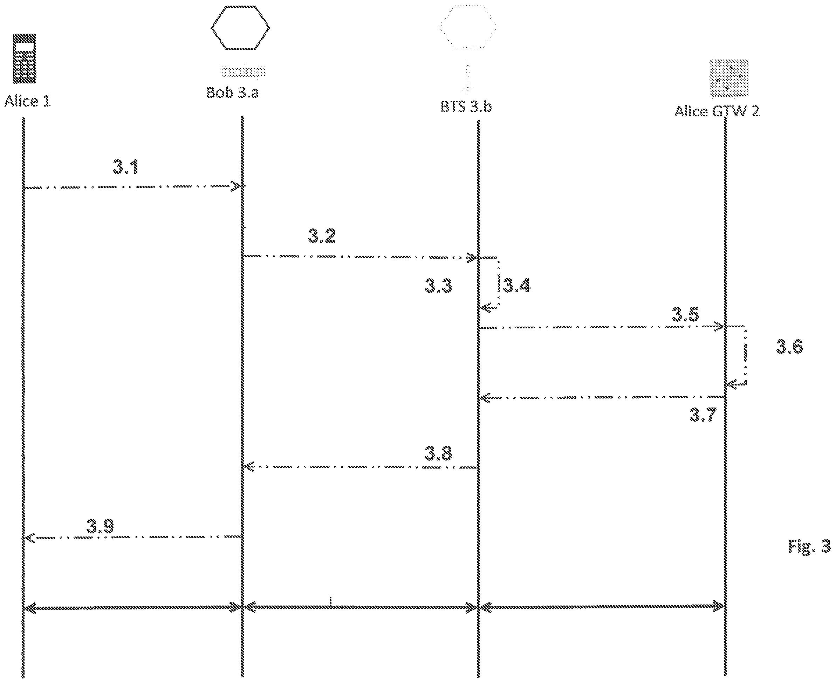

La **Fig.3** illustre les différentes communications sur un circuit utilisant une connexion entre un appareil source 1 et un appareil destinataire 2, et permettant de récupérer la liste des appareils constituant un circuit de communication, selon un mode de réalisation.

A un certain moment, Alice établit une communication avec une passerelle de son opérateur (opérateur Bleu), pour éventuellement accéder à un réseau informatique tel qu'Internet. Une requête de communication est envoyée au réseau et un circuit passant par différents relais est établi. Dans l'exemple qui va être décrit par la suite, Alice communique avec un modem appelé « Bob », ce dernier communique avec une BTS de l'opérateur Vert. Une BTS (acronyme de « Base Transceiver Station », ou en français : « Station de Transmission de Base) est une station émettrice-réceptrice de base qui est un des éléments de base du système cellulaire de téléphonie mobile GSM. La BTS Vert communique avec la passerelle Bleu 2 de l'opérateur d'Alice. Selon cet exemple, le circuit de communication est donc le suivant :
Alice - Modem Bob - BTS Vert - Passerelle GtW Bleu

Dans un premier temps, à l'étape 3.1, Alice émet une requête de connexion comportant au moins une valeur d'en-tête identifiant le type de requête, l'identité de son opérateur, l'identifiant d'Alice Ka et un certificat Ca. L'identifiant de l'appareil source 1 est avantageusement sa clef publique, et le certificat est une valeur particulière obtenue par calcul cryptographique utilisant la clef secrète d'Alice. Le modem Bob reçoit la requête et vérifie le certificat d'Alice (étape 3.2). Cette vérification s'effectue par un calcul cryptographique en utilisant la valeur du certificat et la clef publique d'Alice. Si le certificat n'est pas correct, la communication est bloquée.

Le modem Bob contrôle également si Alice n'est pas référencé dans une liste noire (« Blacklist » en langue Anglo-saxonne). Pour cela, l'identifiant d'Alice est comparé avec tous les identifiants présents dans cette liste. Si c'est le cas, alors la communication est bloquée. Comme une liste noire est habituellement gérée au niveau de chaque opérateur, le modem Bob doit télécharger la liste noire de l'opérateur Bleu qui est celui d'Alice, afin de vérifier que cet appareil source 1 est autorisé à communiquer. Selon une variante de réalisation, tous les appareils interdits de communication sont référencés dans une liste globale, quels que soient leurs opérateurs.

Si tous les contrôles de l'étape 3.2 sont passés avec succès, la requête de connexion peut se propager sur le circuit qui mène à la passerelle d'Alice.

Le modem Bob ajoute aux données au passage de la requête émise par Alice, son identifiant et son certificat. De façon similaire aux données d'Alice, l'identifiant du modem Bob est avantageusement sa clef publique Kb, et le certificat Cb est une valeur particulière obtenue par calcul cryptographique utilisant la clef secrète du modem Bob. A l'étape 3.3, le modem Bob émet sur le circuit qui mène à la passerelle d'Alice, la nouvelle requête de connexion qui est enrichie de ses propres données.

A l'étape 3.4, la BTS Vert exécute des contrôles similaires à ceux réalisés par le modem Bob, sur l'ensemble des identifiants et certificats présents dans la requête. Ainsi, la BTS contrôle le certificat Ca d'Alice et le certificat Cb du modem Bob en utilisant leurs clefs. Si les deux certificats ne sont pas corrects, alors la communication est bloquée. La BTS Vert vérifie ensuite les autorisations d'Alice et du modem Bob en contrôlant que les identifiants d'Alice ou du modem Bob ne sont pas référencés dans une liste noire. Pour cette vérification, la BTS Vert utilise pour cela les identifiants Ka et Kb.

Si tous les contrôles sont passés avec succès, la requête de connexion peut se propager sur le circuit et atteindre la passerelle d'Alice. La BTS Vert ajoute alors au passage de la requête émise par le modem Bob, son identifiant d'Alice et son certificat. De façon similaire aux données d'Alice et du modem Bob, l'identifiant de la BTS Vert est avantageusement sa clef publique Km, et le certificat Cm est une valeur particulière obtenue par calcul cryptographique utilisant la clef secrète de la TS Vert. A l'étape 3.5, la BTS Vert émet sur le circuit qui mène à la passerelle Bleu d'Alice, la requête de connexion qui est enrichie de ses propres données.

La passerelle Bleu 2 du même opérateur qu'Alice reçoit la requête contenant les couples de données suivantes : [(Ka,Ca), (Kb,Cb), (Km,Cm)].

A l'étape 3.6, la passerelle Bleu qui est l'appareil destinataire 2 de la communication avec Alice, contrôle tous les certificats en utilisant les clefs publiques transmises, et vérifie qu'aucun des identifiants des précédents appareils n'est présent dans une liste noire. Si tous les contrôles sont passés avec succès, la requête de connexion peut alors revenir vers l'appareil source 1, c'est à dire vers Alice.

La passerelle Bleu 2 ajoute au passage de la requête émise par la BTS Vert, son identifiant Kg et son certificat Cg. La requête de connexion contient alors les couples de données suivantes : [(Ka,Ca), (Kb,Cb), (Km,Cm), (Kg, Cg)]. On peut ainsi constater que ces données décrivent et identifient chaque appareil constituant le circuit entre Alice et sa passerelle.

A l'étape 3.7, la passerelle 2 renvoie vers Alice la requête et son contenu actuel enrichi par les certificats et identifiant de tous les appareils constituant le circuit.

A l'étape 3.8, la requête de retour de connexion transite à travers les mêmes appareils qu'à l'aller, jusqu'à Alice. A ce moment, la connexion avec la passerelle 2 est établie et Alice connaît par leurs identifiants les appareils du circuit pour l'atteindre (étape 3.9). Alice reçoit également les certificats des relais et peut éventuellement les contrôler.

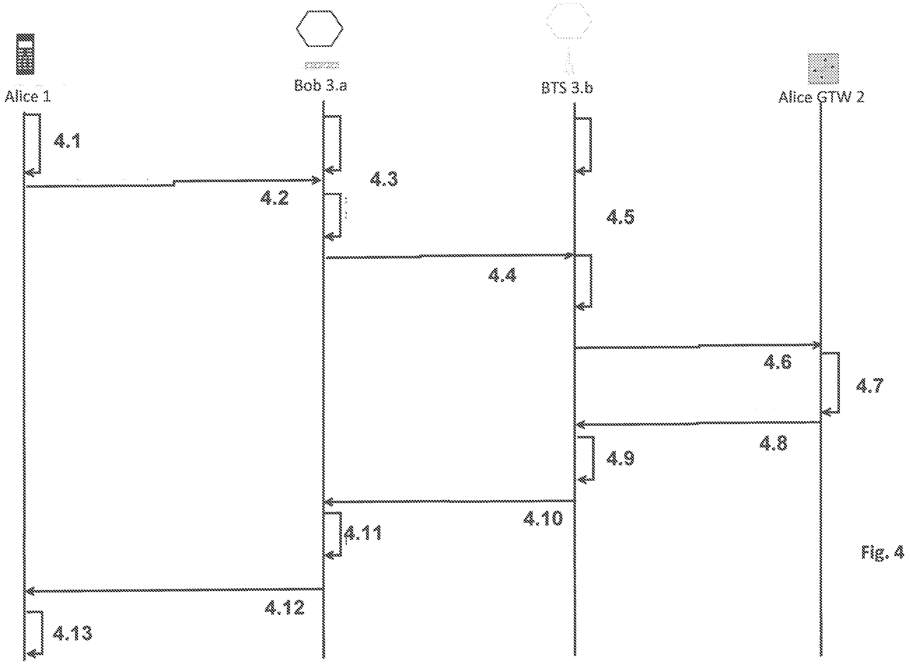

La **Fig.4** illustre les différentes communications sur un circuit en vue d'établir des preuves d'utilisation, ces communications intervenant régulièrement au cours d'une connexion entre Alice 1 et sa passerelle Bleu 2.

Après avoir établi et utilisé une connexion avec sa passerelle, Alice émet une requête pour générer une preuve d'utilisation par tous les appareils du circuit. Dans un premier temps et à l'étape 4.1, Alice génère un nombre aléatoire Sa et en diminue la taille par une fonction dite « de hachage » pour générer un challenge Ha, qu'on appelle également une « empreinte numérique », cette valeur est signée par Alice et génère une signature Sig(Ha). Alice émet une requête dit « requête PoU » comportant au moins une valeur d'en-tête identifiant le type de requête, le challenge d'Alice Ha et la signature Sig(Ha).

A l'étape 4.2, le modem Bob reçoit la requête PoU. Le modem Bob génère alors un nombre aléatoire Sb, le comprime en un challenge Hb, concatène les valeurs :
Ha, Sig(Ha), Hb,
et signe les données ainsi concaténées pour générer une signature Sig(Hb) (étape 4.3). Le modem Bob ajoute aux données de la requête PoU émise par Alice, son challenge Hb et la signature Sig(Hb). Le modem Bob émet sur le circuit qui mène à la passerelle d'Alice, la nouvelle requête PoU enrichie avec ses données.

A l'étape 4.4, la BTS Vert reçoit la requête PoU. La BTS Vert génère un nombre aléatoire Sm, le comprime en un challenge Hm, concatène les valeurs :
Ha, Sig(Ha), Hb, Sig(Hb), Hm,
et signe les données ainsi concaténées pour générer une signature Sig(Hm) (étape 4.5). La BTS Vert ajoute aux données de la requête PoU émise par le modem Bob, son challenge Hm et la signature Sig(Hm). A l'étape 4.6, la BTS Vert émet vers la passerelle d'Alice, la nouvelle requête PoU enrichie avec ses propres données.

A l'étape 4.7, la passerelle Bleu 2 qui est l'appareil destinataire de la communication avec Alice, reçoit la requête PoU et son contenu appelé « demi-trame PoU) et, concatène les valeurs reçues en un paquet B, contenant :
Ha, Sig(Ha), Hb, Sig(Hb), Hm, Sig(Hm) = B

La passerelle Bleu 2 signe les données ainsi concaténées pour générer une signature Sig(B). A l'étape 4.8, la passerelle 2 renvoie vers Alice la requête PoU et son contenu : [B, Sig(B)]. En supposant que le routage n'évolue pas, le retour de trame PoU passe par les mêmes appareils que ceux décrivant le circuit emprunté à l'aller.

En recevant le retour de trame PoU (étape 4.9), la BTS Vert réutilise le nombre aléatoire généré à l'aller Sm, concatène les valeurs :
B, Sig(B), Sm,
et signe les données ainsi concaténées pour générer une signature Sig(Sm). Les données de la trame PoU sont alors enregistrées dans la BTS Vert, qui connaît désormais les appareils du circuit entre Alice et sa passerelle ainsi que les paramètres de sécurité de ces appareils. A l'étape 4.10, la BTS Vert renvoie vers le modem Bob la requête PoU et son contenu : [B, Sig(B), Sm, Sig(Sm)].

En recevant le retour de trame PoU (étape 4.11), le modem bob réutilise le nombre aléatoire généré à l'aller Sb, concatène les valeurs :
B, Sig(B), Sm, Sig(m), Sb
et signe les données ainsi concaténées pour générer une signature Sig(Sb). Les données de la trame PoU sont alors enregistrées dans le modem Bob. A l'étape 4.12, le modem Bob renvoie vers Alice la requête PoU et son contenu : [B, Sig(B), Sm, Sig(m), Sb, Sig(Sb)]. La requête de retour de PoU revient alors vers l'appareil qui l'a lancée.

A l'étape 4.13, Alice reçoit la requête de retour de PoU et vérifie l'authenticité des signatures à partir des nombres aléatoires générés. La vérification s'effectue en utilisant les clefs publiques de chaque appareil. Si l'authenticité des signatures est vérifiée alors une preuve d'utilisation peut être générée pour chaque appareil concerné. Dans le cas contraire, il est alors nécessaire de relancer la communication en passant par un autre chemin

Si l'authenticité de toutes les signatures est vérifiée alors Alice concatène les valeurs reçues :
B, Sig(B), Sm, Sig(m), Sb, Sig(Sb), Sa
et signe les données ainsi concaténées pour générer une signature Sig(Sa). La valeur obtenue par la concaténation des champs suivants :
B, Sig(B), Sm, Sig(m), Sb, Sig(Sb), Sa, Sig(Sa),
constitue une valeur PoU qui est une preuve que les appareils suivants : Alice, le modem Bob, la BTS Vert et la passerelle Bleu 2, ont consommé de la bande passante pour transmettre une communication entre Alice et sa passerelle.

Selon un perfectionnement, la requête PoU qu'Alice transmet à l'étape 4.2, comporte également un numéro de trame. Ce numéro permet d'identifier la trame PoU à l'aller et au retour.

Selon un premier mode de réalisation, chaque appareil du circuit génère son propre nombre aléatoire (Sa, Sb, Sm). Selon une variante de réalisation, un seul nombre aléatoire est utilisé et il est généré par Alice. Ce nombre Sa est transmis dans la requête PoU émise par Alice à Bob (étape 4.2), puis il est transmis de relais en relais, jusqu'au retour vers Alice. Chaque relais du circuit et l'appareil destinataire 2 utilise Sa pour le calcul de sa propre signature. De cette manière, l'ensemble des signatures est personnalisé par Alice et la sécurité est renforcée.

Lors de sa communication avec sa passerelle 2, Alice échange avec elle une certaine quantité de données. Chaque relais peut déterminer la quantité de données qui transite par son intermédiaire. De cette manière, cette information peut être ultérieurement utilisée pour évaluer le niveau d'utilisation de chaque relais.

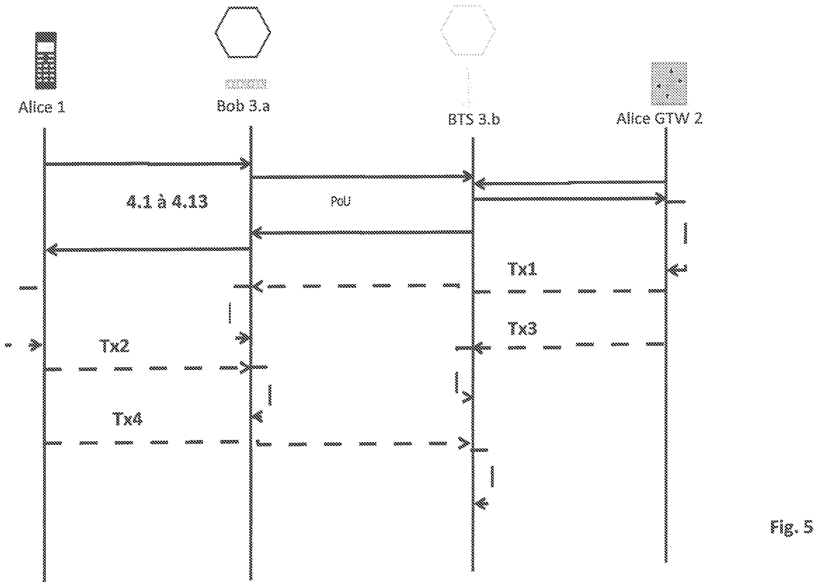

La **Fig.5** illustre les différentes communications sur un circuit pour générer des preuves d'utilisation à partir de chaque relais. Les preuves d'utilisation sont enregistrées dans la mémoire partagée accessible par n'importe quel appareil du réseau informatique. La preuve d'enregistrement est un paquet de données produit par chaque relais d'un circuit qui demande son enregistrement dans une mémoire partagée du réseau. La génération des preuves d'utilisation de chaque relais est à l'initiative des appareils source 1 et destinataire 2 : Alice et sa passerelle Bleu 2, et est déclenché par des requêtes appelées « transaction ».

Comme cela illustré par la **Fig.5****,** une fois que la trame PoU a parcouru le circuit à l'aller et au retour (étape 4.1 à 4.13), Alice 1 et sa passerelle Bleu 2 peuvent émettre des transactions permettant à chaque relais d'enregistrer des preuves d'utilisation. La transaction 1 enregistrée par le modem Bob est générée et signée par la passerelle Bleu 2 à partir de la demi trame PoU fournie par la passerelle Bleu. Cette étape est nécessaire afin de certifier l'ensemble des étapes qui viennent de se dérouler. La transaction 2 enregistrée par le modem Bob est générée et signée par Alice à partir de la trame PoU fournie par Alice. La transaction 3 enregistrée par la BTS Vert est générée et signée par la passerelle Bleu à partir de la demi trame PoU fournie par la passerelle Bleu 2. La transaction 4 enregistrée par la BTS Vert est générée et signée par Alice à partir de la trame PoU fournie par Alice.

Chaque relais qui reçoit une transaction, déclenche l'émission d'une requête d'enregistrement d'une preuve d'utilisation vers une mémoire partagée. Les données contenues dans cette requête et enregistrée en tant que preuves d'utilisation, comportent typiquement les données contenues dans la trame PoU ou demi trame PoU, et la signature de l'appareil qui a émis cette trame.

La transaction 1 contient par exemple les champs suivants :
- half PoU (générée par la passerelle Bleu 2 à l'étape 4.7 de la **Fig. 4****)** + Kg (clé publique de la passerelle Bleu) + Kb (clé publique du modem Bob),
- la signature de la passerelle Bleu 2.

La transaction 2 contient par exemple les champs suivants :
- PoU (générée par Alice à l'étape 4.13 de la **Fig. 4****)** + Ka (clé publique d'Alice) + Kb (clé publique du modem Bob),
- la signature d'Alice.

La transaction 3 contient par exemple les champs suivants :
- half PoU (générée par la passerelle Bleu 2 à l'étape 4.7 de la **Fig. 4****)** + Kg (clé publique de la passerelle Bleu) + Km (clé publique de la BTS Vert)
- la signature de la passerelle Bleu 2.

La transaction 4 contient par exemple les champs suivants :
- PoU (générée par Alice à l'étape 4.13 de la **Fig. 4****)** + Ka (clé publique d'Alice) + Km (clé publique de la BTS Vert)
- la signature d'Alice.

De façon générale, l'appareil source déclenche l'émission d'autant de transactions que de relais identifiés dans le circuit traversé par la trame PoU. Dans le même temps, l'appareil destinataire déclenche également l'émission d'autant de transactions (Tx1, Tx2) que de relais traversés par la demi-trame PoU. De cette manière, les preuves d'utilisation sont produites au sein d'un circuit quel que soit le sens de transmission des données.

La trame PoU reçue par l'appareil source 1 et la demi-trame PoU reçue par l'appareil destinataire 2 comportent les identifiants des relais traversés. Dans l'exemple illustré par les **Fig. 3****,** **4** et **5****,** les deux relais : le modem Bob et la BTS Vert qui se situent entre Alice et sa passerelle, reçoivent de leurs parts chacun deux transactions.

Lors de la réception d'une transaction, chaque relais 3 demande l'enregistrement de la preuve d'utilisation dans la mémoire partagée. A la suite de cette requête, la mémoire partagée enregistre la preuve d'utilisation associée à ce relais. Avantageusement, la mémoire partagée émet un accusé de réception indiquant que l'enregistrement est correctement effectué. Selon une variante, c'est le relais lui-même qui vérifie l'enregistrement en émettant une requête de lecture.

Si un relais qui a émis une demande d'enregistrement vers la mémoire partagée, ne reçoit rien au bout d'un certain temps, alors ce relais bloque le circuit. La communication entre les appareils source 1 et destinataire 2 est alors interrompue et une nouvelle requête d'établissement d'un nouveau circuit de communication doit être relancée par Alice.

Une fois que les preuves d'utilisation sont émises par les relais et enregistrées dans la mémoire distribuée, elles sont consultables à tout moment par des applications pour déterminer l'utilisation de chaque relais du réseau.

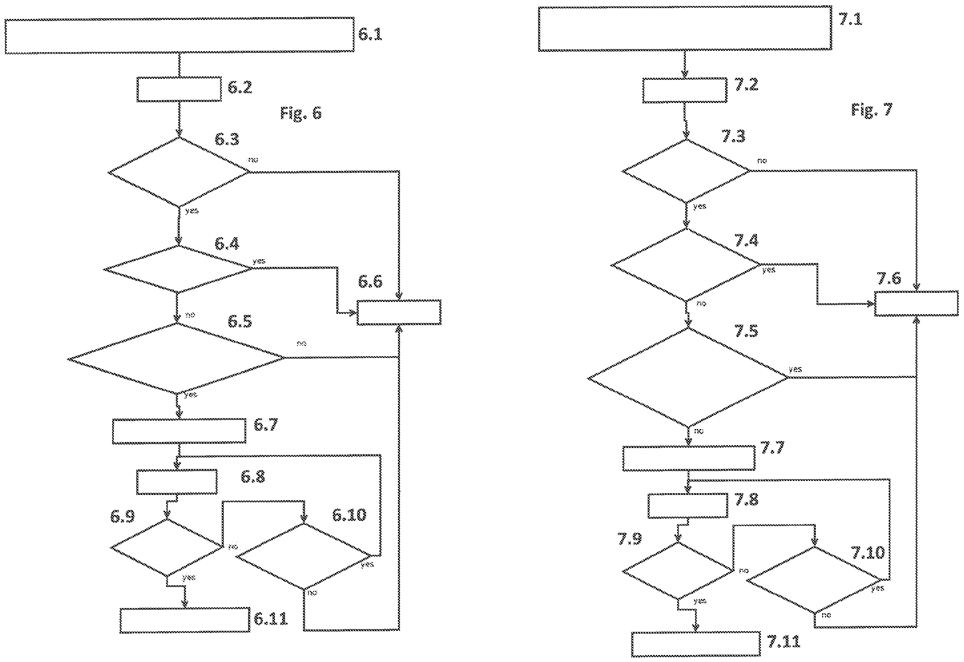

La **Fig.6** présente un exemple d'ordinogramme des étapes d'un procédé d'établissement de connexions exécuté au niveau d'un premier relais, le modem Bob par exemple. Ces étapes interviennent au moment où Alice entre en communication avec ce relais pour atteindre sa passerelle. A l'étape 6.1, Alice transmet au modem Bob sa clef publique servant d'identifiant et son certificat. Le modem Bob commence alors une série de contrôle (étape 6.2). Le modem B récupère à l'étape 6.3, la valeur du certificat émis par Alice et contrôle sa validité en utilisant la clef publique transmise. En utilisant l'identifiant d'Alice, le modem B vérifie qu'Alice n'est pas dans une liste noire et que son opérateur lui a bien donné les droits pour communiquer (étape 6.4). Le relais peut également contrôler que l'appareil Alice respecte certaines règles internes, par exemple le fait que le niveau de réputation d'Alice soit supérieur à un certain seuil, que l'opérateur d'Alice soit dans une liste blanche du relais si cette liste existe, ... (étape 6.5). Si l'un quelconque de ces contrôles n'est pas respecté, l'établissement d'une communication entre Alice et sa passerelle n'est pas possible et la connexion est refusée (étape 6.6).

Dans le cas contraire, à l'étape 6.7, le relais entre en communication avec le relais suivant au sein du circuit afin d'atteindre l'appareil destinataire 2, ou directement l'appareil destinataire 2. A cette fin, une requête de communication est lancée vers le relais suivant (étape 6.8) et un temporisateur est lancé définissant une durée au cours de laquelle la connexion doit s'établir (étape 6.9). Si la communication ne s'est pas établie, le relais recherche d'autres alternatives pour établir le circuit entre Alice et sa passerelle et teste à l'étape 6.10 si ces alternatives existent. Si ce n'est pas le cas, alors la connexion est refusée (étape 6.6). Dans le cas contraire, les alternatives sont testées et si au moins l'une d'entre elles fonctionne, alors la connexion avec le prochain relais ou l'appareil destinataire 2 est établie (étape 6.11).

La **Fig.7** présente un exemple d'ordinogramme des étapes d'un procédé d'établissement de connexions exécuté par le relais suivant celui dont les étapes sont représentées à la **Fig. 6****,** ce relais est par exemple la BTS Vert. Les étapes suivantes sont identiques entre les deux ordinogrammes : 6.1 et 7.1, 6.2 et 7.2, 6.6 et 7.6, 6.7 et 7.7, 6.8 et 7.8, 6.9 et 7.9, 6.10 et 7.10, 6.11 et 7.11.

La BTS récupère à l'étape 7.3, la valeur des certificats émis par Alice et le modem Bob, et contrôle leurs validités en utilisant les clefs publiques transmises. A l'étape 7.4, en utilisant leurs identifiants, la BTS Vert vérifie qu'Alice n'est pas dans une liste noire, et que le modem Bob n'est pas non plus dans une liste noire. Par ce contrôle, la BTS Vert vérifie notamment que les opérateurs de ces deux appareils leur ont bien donné les droits pour communiquer. La BTS Vert peut également contrôler qu'Alice et le modem Bob respectent certaines règles internes, par exemple le fait que la réputation d'Alice soit supérieure à un certain seuil, que l'opérateur d'Alice soit dans une liste blanche du relais si cette liste existe, (étape 7.5). Si l'un quelconque de ces contrôles n'est pas respecté, l'établissement d'une communication entre Alice et sa passerelle n'est pas possible et la connexion est refusée (étape 7.6).

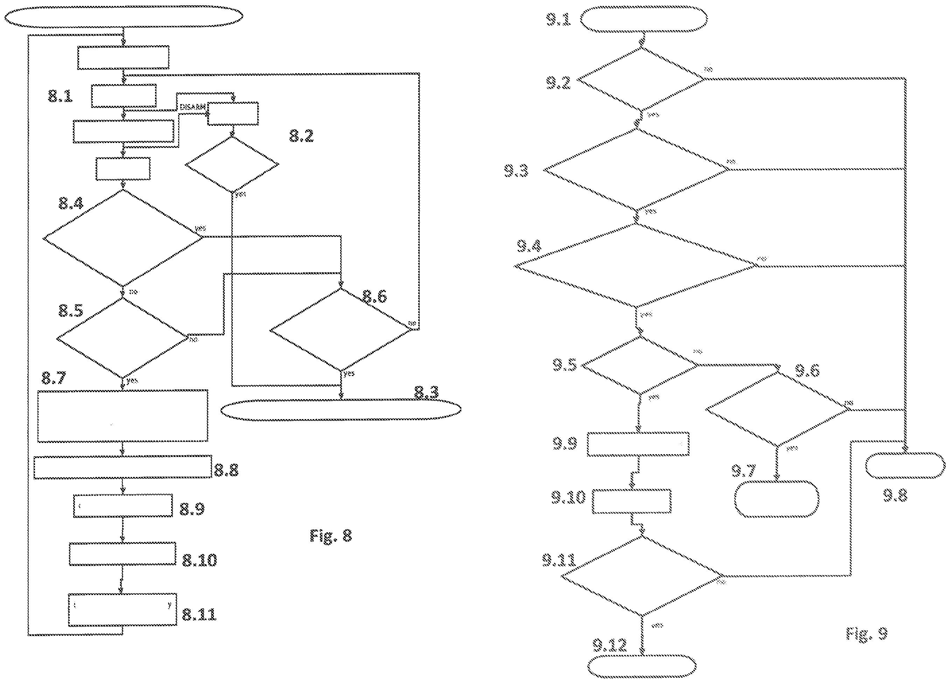

La **Fig.8** présente un exemple d'ordinogramme des étapes pour la génération d'une trame PoU côté client, c'est à dire du côté de l'appareil source 1. A l'étape 8.1, le circuit entre Alice et sa passerelle est établi et passe par les relais 3 : le modem Bob 3.a et la BTS Vert 3.b.

Selon un mode de réalisation particulier, la trame PoU est émise par l'appareil source 1 lors d'émission de paquets émis à des intervalles de temps réguliers. De cette manière, les preuves d'utilisation ou PoU sont générées périodiquement, et on peut déterminer au cours d'une période donnée, l'utilisation de chaque relais d'un circuit. Dans la pratique et selon un exemple de réalisation, la périodicité de l'émission des requêtes PoU est 10 minutes.

A l'étape 8.2, Alice arme un temporisateur et lance la requête PoU, puis attend le retour de trame PoU. Si la trame de retour n'est pas reçue au cours de la période définie dans le temporisateur, alors la trame de retour est considérée comme non reçue et la connexion ne peut être maintenue. Il est alors nécessaire de relancer la communication en passant par un autre chemin (étape 8.3) et effectuer les étapes illustrées à la **Fig. 3****.**

A l'étape 8.4, Alice vérifie l'intégrité de la trame de retour de PoU. Cette vérification s'effectue en vérifiant que le calcul de signature est correctement réalisé. A l'étape 8.5, Alice exécute un contrôle en utilisant la clef publique. Si ces deux derniers contrôles révèlent des erreurs, les données sont altérées et on peut réessayer en espérant que la communication sera meilleure lors de l'essai prochain. A l'étape 8.6, lorsqu'un certain nombre d'essais (par exemple : 3) sont effectués, la connexion ne peut être maintenue et par conséquent annulée (étape 8.3).

Dans le cas contraire, Alice lance le processus de génération des transactions à l'intention de tous les relais identifiés dans le circuit (étape 8.7). A l'étape 8.8, Alice met en paquet les données de signature afin de constituer les requêtes de transactions qui seront traitées dans chaque relais (en l'occurrence le modem Bob et la BTS Vert. Alice signe ensuite les paquets de données avec sa propre clef (étape 8.9). A l'étape 8.10, les transactions sont transmises au modem Bob, si celles-ci ne lui sont pas destinées, il les retransmet au relais suivant. La dernière étape de la boucle concerne la mise à jour de la périodicité de l'émission des trames PoU (étape 8.11).

Selon une variante, la trame PoU est émise par l'appareil source 1 chaque fois que la quantité de données échangées avec l'appareil destinataire 2 depuis la dernière émission de la trame PoU dépasse une quantité déterminée de données. De cette manière, les preuves d'utilisation sont générées régulièrement, et on peut facilement déterminer la quantité de données échangées par chaque relais en comptant le nombre de preuves d'utilisation générées.

La **Fig.9** présente un exemple d'ordinogramme des étapes pour le traitement de transactions au niveau d'un relais des étapes pour le traitement de transactions par un relais 3, par exemple le modem Bob. Préalablement à ces étapes, le circuit entre Alice et sa passerelle est établi et passe par les relais : le modem Bob et la BTS Vert, Alice a envoyé une requête PoU et vient d'émettre vers le modem Bob une requête de transaction (étape 9.1).

A l'étape 9.2, le modem Bob contrôle si la demi-trame PoU qu'il a précédemment reçu lors de l'étape 4.4, est bien enregistrée dans sa mémoire et est valide. Puis, à l'étape 9.3, le modem Bob vérifie la cohérence entre les données contenues dans la transaction qu'il vient de recevoir d'Alice et les données de trame PoU qui sont enregistrées en mémoire. Le modem Bob contrôle notamment si son rang dans la requête de transaction correspond bien à sa place dans le circuit. Le modem Bob vérifie également que l'appareil source 1 qui est l'émetteur de la requête PoU est bien le même que celui qui vient d'émettre la requête de transaction, c'est à dire Alice (étape 9.4).

A l'étape 9.5, le modem Bob contrôle s'il est bien le destinataire de cette requête de transaction. Si ce n'est pas le cas, le modem Bob contrôle si le destinataire de cette requête est un appareil qui se trouve après lui dans le circuit défini dans la trame PoU (étape 9.6). Si c'est le cas, alors le modem Bob lui transmet la requête de transaction (étape 9.7), sinon ou si un des contrôles effectués lors des étapes 9.2, 9.3 et 9.4 n'est pas correct, alors le modem Bob décide que la transaction n'est pas valide et l'interrompt (étape 9.8). Avantageusement, le modem Bob transmet un compte-rendu de non-exécution à l'émetteur de la transaction, c'est à dire Alice.

Si toutes les données de la transaction sont contrôlées correctement, alors à l'étape 9.9, le modem Bob transmet le paquet de données constituant la transaction à la mémoire partagée. La mémoire partagée enregistre alors la transaction, constituant ainsi une preuve que le modem Bob a bien été utilisé lors d'une communication entre Alice et sa passerelle Bleu 2 et renvoie dans un délai imparti un accusé de réception au modem Bob (étape 9/10). Si le modem Bob ne reçoit pas d'accusé de réception dans le délai imparti (étape 9.11), alors il décide que la transaction n'est pas valide et l'interrompt (étape 9.8).

Si l'accusé réception est bien reçu de la mémoire partagée, alors la transaction est valide et la preuve d'utilisation est bien enregistrée dans le réseau (étape 9.11) et est consultable à tout moment.

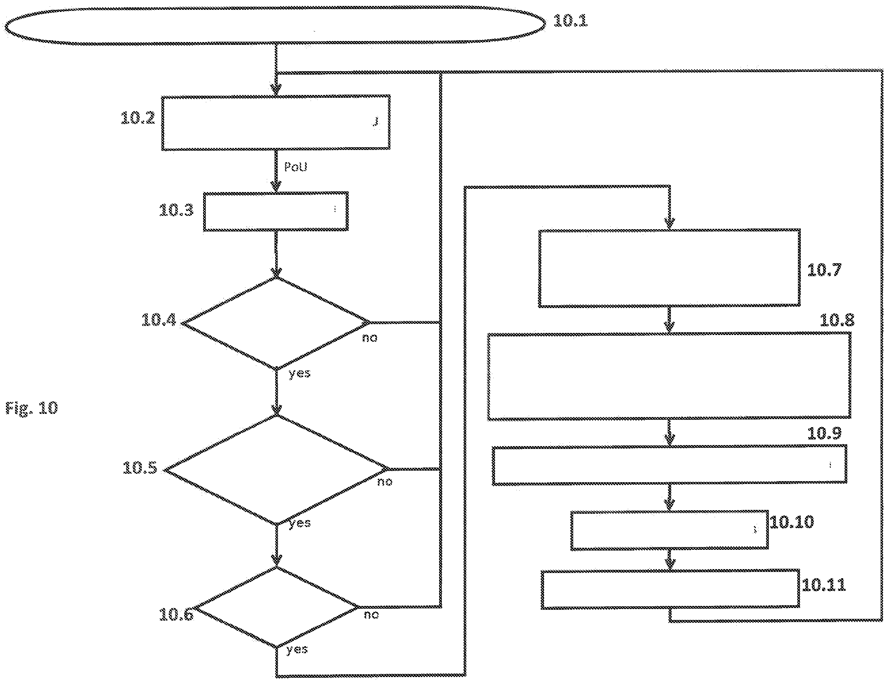

La **Fig.10** présente un exemple d'ordinogramme des étapes pour le traitement d'une requête PoU par l'appareil destinataire 2, c'est à dire la passerelle Bleu d'Alice 2.

A l'étape 10.1, Alice est connectée à son opérateur via sa passerelle Bleu 2, qui est l'appareil destinataire 2 du circuit, et qui attend la réception d'une requête PoU (étape 10.2). A l'étape 10.3, la requête PoU est reçue et les contrôles peuvent alors commencés.

A l'étape 10.4, la passerelle Bleu 2 contrôle si les signatures contenues dans la trame PoU sont valides, cela concerne toutes les signatures des appareils constituant le circuit, c'est à dire : Alice, le modem Bob et la BTS Vert. A l'étape 10.5, la passerelle Bleu 2 vérifie si un débordement est atteint, en contrôlant que le paramètre m est inférieur à une valeur de seuil. La passerelle Bleu 2 contrôle également si la liste des appareils identifiés dans la trame PoU correspond au circuit entre l'appareil source 1 et lui (étape 10.6). Si l'un de ces contrôles n'est pas correct, alors la requête est interrompue et la passerelle Bleu 2 recommence à attendre l'arrivée d'une nouvelle requête de PoU (étape 10.2).

Si tous les contrôles sont corrects, la passerelle Bleu 2 émet alors des transactions et la trame de retour de PoU.

La passerelle Bleu 2 signe tout d'abord la demi trame PoU qui vient d'être reçue (étape 10.7). La passerelle Bleu 2 déclenche l'émission d'autant de transactions que de relais 3 identifiés au cours de la communication de l'appareil source 1 vers l'appareil destinataire 2. Dans le cas présent, la passerelle Bleu 2 émet une requête de transaction à Alice, au modem Bob et à la BTS Vert (étape 10.8). De cette manière, chacun de ces appareils peut prouver qu'il a bien été utilisé pour transmettre au moins dans un sens, une communication entre Alice et sa passerelle.

A l'étape 10.9, la passerelle Bleu 2 met en paquet les données constituant la trame de retour de PoU, signe les données (étape 10.10) et émet la trame de retour vers le premier relais du circuit, c'est à dire le relais Vert (étape 10.11). La trame de retour revient par le même circuit et est réceptionné par l'appareil source 1, c'est à dire Alice.

La présente invention permet notamment de sauvegarder des preuves authentifiées d'utilisation de différents relais 3 transmettant des données entre un appareil source 1 et un appareil destinataire 2. Les preuves d'utilisation qui sont consultables à tout moment en se connectant à une mémoire partagée, sont utilisables notamment par des applications dédiées à l'optimisation de l'architecture des réseaux, ou la facturation d'allocation de bande passante ou de location d'appareils.

En fonction du mode de réalisation choisi, certains actes, actions, évènements ou fonctions de chacun des procédés décrits dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, les procédés proposés et les dispositifs correspondants comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Procédé d'élaboration de données d'utilisation d'un relais mis en œuvre dans un réseau informatique comprenant au moins un appareil source (1), un appareil destinataire (2), au moins une mémoire partagée et au moins un relais (3) constituant un circuit pour établir une communication entre l'appareil source et l'appareil destinataire, comprenant les étapes suivantes mises en œuvre au niveau de l'appareil source :
- récupération (3.9) des identifiants des relais constituant ledit circuit,
- émission (4.2) d'une trame dite « PoU » à destination de l'appareil destinataire, chaque relais du circuit ajoutant au passage dans la trame PoU une signature réalisée à partir d'un challenge et d'une clef propre audit relais,
- récupération (4.12) en retour de ladite trame PoU d'au moins les signatures de chaque relais,
- vérification (4.13) des signatures reçues en utilisant les clefs publiques des relais dudit circuit, l'authentification des signatures déclenchant les étapes suivantes :
- élaboration (8.7) à partir des données reçues d'une liste ordonnée d'identifiants des relais utilisés pour établir ladite communication,
- émission (8.10) de trames de transactions à destination de chaque relais identifié dans ladite liste pour générer des preuves d'utilisation comportant au moins les signatures contenues dans la trame PoU, les trames de transactions étant conçues pour déclencher l'émission par chaque relais d'une preuve d'utilisation enregistrée dans une mémoire partagée.

2. Procédé selon la revendication 2 dans lequel, consécutivement à la récupération des identifiants des relais, l'appareil source compare les identifiants reçus au contenu d'une liste noire d'appareils, la présence d'un identifiant de relais dans ladite liste noire stoppant la communication entre l'appareil source et l'appareil destinataire et déclenchant une nouvelle étape de détermination d'un circuit ne passant pas par le relais identifié.

3. Procédé selon la revendication 1 ou 2 dans lequel la trame PoU est émise par l'appareil source (1) à intervalle de temps régulier.

4. Procédé selon la revendication 1 ou 2 dans lequel la trame PoU est émise par l'appareil source (1) chaque fois que la quantité de données échangées avec l'appareil destinataire depuis la dernière émission de la trame PoU dépasse une quantité déterminée de données.

5. Procédé selon l'une quelconque des revendications précédentes dans lequel la trame PoU émise par l'appareil source (1) comporte la valeur du challenge utilisée par les relais pour calculer les signatures à l'aide de leurs clefs secrètes.

6. Procédé d'enregistrement de données d'utilisation d'un relais (3) mis en œuvre dans un réseau informatique comprenant au moins un appareil source (1), un appareil destinataire (2), au moins une mémoire partagée et au moins un relais (3) constituant un circuit pour établir une communication entre l'appareil source et l'appareil destinataire, comprenant les étapes suivantes mises en œuvre au niveau d'au moins un relais :
- émission vers l'appareil source de l'identifiant du relais (3),
- réception (4.2 ; 4.4) d'une trame dite « PoU » en provenance de l'appareil source ou du relais précédent au sein du circuit,
- calcul d'une signature à partir d'un challenge et d'une clef propre au dit relais,
- rajout (4.3 ; 4.5) d'au moins cette signature à la trame PoU et transmission de la trame PoU à l'appareil destinataire ou au relais présent sur le circuit en direction de l'appareil destinataire (2), suivant la position du relais dans ledit circuit,
- réception (9.1) d'au moins une trame de transactions en provenance de l'appareil source (1) ou de l'appareil destinataire (2), la trame de transaction comportant au moins les signatures des relais contenues dans la trame PoU,
- émission (9.9) consécutivement à la réception de chaque transaction d'une requête d'enregistrement dans une mémoire partagée une preuve d'utilisation de ce relais comportant au moins les signatures des relais du circuit.

7. Procédé selon la revendication 6 dans lequel il comporte une étape de réception d'une trame dite « retour de PoU » en provenance de l'appareil destinataire contenant au moins l'ensemble des identifiants de la trame PoU reçue, une étape de transmission de ladite trame reçue vers l'appareil source, et une étape ultérieure de réception en provenance de l'appareil source d'une trame de transactions déclenchant la génération d'une preuve d'utilisation du relais.

8. Procédé selon la revendication 6 ou 7 dans lequel le relais reçoit de la mémoire partagée un message de retour indiquant que l'enregistrement s'est correctement effectué, une absence du message de retour pendant une durée déterminée après l'envoi déclenche la suppression du circuit de communication.

9. Procédé selon l'une quelconque des revendications 6 à 8 dans lequel les identifiants des relais comportent une valeur de clef publique caractéristique à chaque relais.

10. Procédé selon la revendication 8 dans lequel le relais fournit un certificat produit à partir de la clef secrète associée à sa clef publique, ledit certificat étant ajouté dans la trame PoU, le relais vérifiant le certificat émis par un relais à l'aide d'un calcul cryptographique faisant intervenir ladite clef publique.

11. Procédé selon la revendication 9 dans lequel le certificat associé à un relais est généré à partir d'un nombre aléatoire.

12. Procédé selon l'une quelconque des revendications 6 à 11 dans lequel la trame PoU reçue comporte la valeur du challenge utilisée par le relais pour calculer la signature à l'aide de la clef secrète du relais.

13. Procédé d'élaboration de données d'utilisation d'un relais mis en œuvre dans un réseau informatique comprenant au moins un appareil source (1), un appareil destinataire (2), au moins une mémoire partagée et au moins un relais (3) constituant un circuit pour établir une communication entre l'appareil source et l'appareil destinataire, comprenant les étapes suivantes mises en œuvre au niveau de l'appareil destinataire :
- réception de l'identifiant d'au moins un relais (3) présent sur le circuit,
- réception (10.2) d'une trame dite « PoU » en provenance de l'appareil source et contenant au moins une signature réalisée par un relais à partir d'un challenge et d'une clef propre audit relais,
- vérification (10.4) des signatures reçues en utilisant les clefs publiques des relais dudit circuit, l'authentification des signatures déclenchant les étapes suivantes :
- élaboration à partir des données reçues d'une liste ordonnée d'identifiants des relais utilisés pour établir ladite communication,
- émission (10.7) de trames de transactions à destination de chaque relais identifié dans ladite liste pour générer des preuves d'utilisation de ces relais comportant au moins les signatures contenues dans la trame PoU, les trames de transactions étant conçues pour déclencher l'émission par chaque relais d'une preuve d'utilisation enregistrée dans une mémoire partagée.

14. Procédé selon la revendication 13 comportant en outre une étape d'élaboration d'une trame de données dite « retour de PoU » comportant les certificats et les identifiants d'au moins tous les relais (3) du circuit, et une étape d'émission (10.8) vers l'appareil source de ladite trame retour de PoU, avec la signature réalisée à l'aide d'une clef de l'appareil destinataire.

15. Appareil source (1) destiné à entrer en communication avec un appareil destinataire (2) à travers un circuit comportant au moins un relais (3) et appartenant à un réseau informatique comportant au moins une mémoire partagée, ledit appareil (1) comportant un moyen de communication récupérant les identifiants des relais constituant ledit circuit et émettant une première trame dite « PoU » à destination de l'appareil destinataire, ladite trame étant destiné à récupérer au passage de chaque relais une signature réalisée à partir d'un challenge et d'une clef propre audit relais , un moyen de vérification des signatures récupérées en utilisant les clefs publiques des relais dudit circuit, l'authentification des signatures par le moyen de vérification déclenchant l'émission par le moyen de communication de trames de transactions à destination de chaque relais identifié dans ledit circuit, lesdites trames de transactions comportant au moins les signatures contenues dans la trame PoU et déclenchant lors de leur réception par chaque relais (3) l'émission d'une requête d'enregistrement d'une preuve d'utilisation vers une mémoire partagée.

16. Appareil relais (3 ; 3.a ; 3.b) destiné à établir une communication entre un appareil source (1) et un appareil destinataire (2) à travers un circuit comportant au moins ledit relais (3) et appartenant à un réseau informatique comportant au moins une mémoire partagée, ledit appareil relais comportant un moyen de communication (12) recevant en provenance de l'appareil source ou du relais précédent au sein du circuit une trame dite « PoU », et un moyen de calcul (10,11) d'une signature à partir d'un challenge et d'une clef propre audit relais, ledit moyen de communication (12) émettant vers l'appareil destinataire ou du relais présent dans le circuit en direction de l'appareil destinataire ladite trame PoU en y rajoutant au moins sa signature calculée, ledit moyen de communication recevant ultérieurement en provenance de l'appareil source (1) ou de l'appareil destinataire (2) au moins une trame de transactions comportant au moins les signatures des relais contenues dans la trame PoU, ledit moyen de communication émettant consécutivement à la réception de chaque transaction une requête d'enregistrement dans une mémoire partagée d'une preuve d'utilisation de ce relais comportant au moins les signatures des relais du circuit.

17. Appareil destinataire (2) destiné à recevoir une communication d'un appareil source (1) à travers un circuit comportant au moins un relais et appartenant à un réseau informatique comportant au moins une mémoire partagée, ledit appareil destinataire (2) comportant un moyen de communication recevant une trame dite « PoU » en provenance de l'appareil source et contenant au moins une signature réalisée à partir d'un challenge et d'une clef propre à au moins un relais du circuit, un moyen de vérification des signatures de la trame PoU en utilisant les clefs publiques des relais dudit circuit, l'authentification des signatures par le moyen de vérification déclenchant l'émission par le moyen de communication de trames de transactions à destination de chaque relais identifié dans ledit circuit pour générer des preuves d'utilisation de ces relais, les trames de transactions comportant au moins les signatures contenues dans la trame PoU étant conçues pour déclencher l'émission par chaque relais d'une preuve d'utilisation enregistrée dans une mémoire partagée.

18. Programme d'ordinateur comportant des instructions pour la mise en œuvre d'un procédé selon l'une quelconque des revendications 1 à 11, lorsque ce programme est exécuté par un processeur.

19. Support d'enregistrement non transitoire lisible par un ordinateur sur lequel est enregistré un programme comprenant des instructions pour la mise en œuvre d'un procédé selon l'une quelconque des revendications 1 à 11.

## Patentansprüche

1. Verfahren zum Erstellen von Nutzdaten eines Relais, das in einem Computernetzwerk durchgeführt wird, das mindestens ein Quellgerät (1), ein Zielgerät (2), mindestens einen gemeinsamen Speicher und mindestens ein Relais (3) enthält, das eine Schaltung bildet, um eine Kommunikation zwischen dem Quellgerät und dem Zielgerät aufzubauen, das die folgenden Schritte enthält, die im Bereich des Quellgeräts durchgeführt werden:
- Abrufen (3.9) der Kennungen der die Schaltung bildenden Relais,
- Senden (4.2) eines "PoU" genannten Rahmens an das Zielgerät, wobei jedes Relais der Schaltung beim Durchgang eine Signatur in den Rahmen PoU hinzufügt, die ausgehend von einer Challenge und einem dem Relais eigenen Schlüssel hergestellt wird,
- Rückabrufen (4.12) vom Rahmen PoU mindestens der Signaturen jedes Relais,
- Überprüfen (4.13) der empfangenen Signaturen unter Verwendung der öffentlichen Schlüssel der Relais der Schaltung, wobei die Authentifizierung der Signaturen die folgenden Schritte auslöst:
- Erstellen (8.7), ausgehend von den empfangenen Daten, einer geordneten Liste von Kennungen der Relais, die für den Aufbau der Kommunikation verwendet werden,
- Senden (8.10) von Transaktionsrahmen an jedes in der Liste identifizierte Relais, um Nutzungsnachweise zu generieren, die mindestens die im Rahmen PoU enthaltenen Signaturen aufweisen, wobei die Transaktionsrahmen konzipiert sind, das Senden eines in einem gemeinsamen Speicher gespeicherten Nutzungsnachweises durch jedes Relais auszulösen.

2. Verfahren nach Anspruch 2, wobei das Quellgerät nach dem Abrufen der Kennungen der Relais die empfangenen Kennungen mit dem Inhalt einer schwarzen Liste von Geräten vergleicht, wobei das Vorhandensein einer Relaiskennung in der schwarzen Liste die Kommunikation zwischen dem Quellgerät und dem Zielgerät stoppt und einen neuen Schritt der Bestimmung einer Schaltung auslöst, die nicht über das identifizierte Relais geht.

3. Verfahren nach Anspruch 1 oder 2, wobei der Rahmen PoU in regelmäßigem Zeitabstand vom Quellgerät (1) gesendet wird.

4. Verfahren nach Anspruch 1 oder 2, wobei der Rahmen PoU jedes Mal vom Quellgerät (1) gesendet wird, wenn die Menge von mit dem Zielgerät seit dem letzten Senden des Rahmens PoU ausgetauschten Daten eine bestimmte Datenmenge überschreitet.

5. Verfahren nach einem der vorhergehenden Ansprüche, wobei der vom Quellgerät (1) gesendete Rahmen PoU den Wert der Challenge aufweist, die von den Relais verwendet wird, um die Signaturen mit Hilfe ihrer Geheimschlüssel zu berechnen.

6. Verfahren zum Speichern von Nutzdaten eines Relais (3), das in einem Computernetzwerk durchgeführt wird, das mindestens ein Quellgerät (1), ein Zielgerät (2), mindestens einen gemeinsamen Speicher und mindestens ein Relais (3) enthält, das eine Schaltung bildet, um eine Kommunikation zwischen dem Quellgerät und dem Zielgerät aufzubauen, das die folgenden Schritte enthält, die im Bereich mindestens eines Relais durchgeführt werden:
- Senden der Kennung des Relais (3) an das Quellgerät,
- Empfangen (4.2; 4.4) eines "PoU" genannten Rahmens vom Quellgerät oder vom vorhergehenden Relais innerhalb der Schaltung,
- Berechnen einer Signatur ausgehend von einer Challenge und einem dem Relais eigenen Schlüssel,
- Hinzufügen (4.3; 4.5) mindestens dieser Signatur zum Rahmen PoU und Übertragen des Rahmens PoU an das Zielgerät oder an das auf der Schaltung in Richtung des Zielgeräts (2) vorhandene Relais, gemäß der Stellung des Relais in der Schaltung,
- Empfangen (9.1) mindestens eines Transaktionsrahmens vom Quellgerät (1) oder vom Zielgerät (2), wobei der Transaktionsrahmen mindestens die Signaturen der Relais aufweist, die im Rahmen PoU enthalten sind,
- Senden (9.9), nach dem Empfang jeder Transaktion, einer Anforderung des Speicherns in einem gemeinsamen Speicher eines Nutzungsnachweises dieses Relais, der mindestens die Signaturen der Relais der Schaltung aufweist.

7. Verfahren nach Anspruch 6, wobei es einen Schritt des Empfangs eines "Rücksendung von PoU" genannten Rahmens vom Zielgerät, der mindestens die Gesamtheit der Kennungen des empfangenen Rahmens PoU enthält, einen Schritt der Übertragung des empfangenen Rahmens an das Quellgerät, und einen späteren Schritt des Empfangs eines Transaktionsrahmens vom Quellgerät aufweist, der die Generierung eines Nutzungsnachweises des Relais auslöst.

8. Verfahren nach Anspruch 6 oder 7, wobei das Relais vom gemeinsamen Speicher eine Rückmeldung empfängt, die anzeigt, dass das Speichern korrekt erfolgt ist, wobei eine Abwesenheit der Rückmeldung während einer bestimmten Dauer nach dem Senden das Löschen der Kommunikationsschaltung auslöst.

9. Verfahren nach einem der Ansprüche 6 bis 8, wobei die Kennungen der Relais einen für jedes Relais charakteristischen öffentlichen Schlüsselwert aufweisen.

10. Verfahren nach Anspruch 8, wobei das Relais ein Zertifikat liefert, das ausgehend von dem seinem öffentlichen Schlüssel zugeordneten Geheimschlüssel erzeugt wird, wobei das Zertifikat in den Rahmen PoU hinzugefügt wird, wobei das Relais das von einem Relais gesendete Zertifikat mit Hilfe einer kryptographischen Berechnung überprüft, die den öffentlichen Schlüssel einsetzt.

11. Verfahren nach Anspruch 9, wobei das einem Relais zugeordnete Zertifikat ausgehend von einer Zufallszahl generiert wird.

12. Verfahren nach einem der Ansprüche 6 bis 11, wobei der empfangene Rahmen PoU den Wert der vom Relais zur Berechnung der Signatur mit Hilfe des Geheimschlüssels des Relais verwendeten Challenge aufweist.

13. Verfahren zur Erstellung von Nutzdaten eines Relais, das in einem Computernetzwerk verwendet wird, das mindestens ein Quellgerät (1), ein Zielgerät (2), mindestens einen gemeinsamen Speicher und mindestens ein Relais (3) enthält, das eine Schaltung bildet, um eine Kommunikation zwischen dem Quellgerät und dem Zielgerät aufzubauen, das die folgenden Schritte enthält, die im Bereich des Zielgeräts durchgeführt werden:
- Empfangen der Kennung mindestens eines in der Schaltung vorhandenen Relais (3),
- Empfangen (10.2) eines "PoU" genannten Rahmens, der vom Quellgerät kommt und mindestens eine Signatur enthält, die von einem Relais ausgehend von einer Challenge und einem dem Relais eigenen Schlüssel hergestellt wird,
- Überprüfen (10.4) der empfangenen Signaturen unter Verwendung der öffentlichen Schlüssel der Relais der Schaltung, wobei die Authentifizierung der Signaturen die folgenden Schritte auslöst:
- Erstellen ausgehend von den empfangenen Daten einer geordneten Liste von Kennungen der zum Aufbau der Kommunikation verwendeten Relais,
- Senden (10.7) von Transaktionsrahmen an jedes in der Liste identifizierte Relais, um Nutzungsnachweise dieser Relais zu generieren, die mindestens die im Rahmen PoU enthaltenen Signaturen aufweisen, wobei die Transaktionsrahmen konzipiert sind, das Senden eines in einem gemeinsamen Speicher gespeicherten Nutzungsnachweises durch jedes Relais auszulösen.

14. Verfahren nach Anspruch 13, das außerdem einen Schritt des Erstellens eines "Rücksendung von PoU" genannten Datenrahmens, der die Zertifikate und die Kennungen mindestens aller Relais (3) der Schaltung aufweist, und einen Schritt des Sendens (10.8) des Rücksendung-von-PoU-Rahmens mit der mit Hilfe eines Schlüssels des Zielgeräts hergestellten Signatur an das Quellgerät aufweist.

15. Quellgerät (1), das dazu bestimmt ist, mit einem Zielgerät (2) über eine Schaltung zu kommunizieren, die mindestens ein Relais (3) aufweist und zu einem Computernetzwerk gehört, das mindestens einen gemeinsamen Speicher aufweist, wobei das Gerät (1) eine Kommunikationseinrichtung, die die Kennungen der die Schaltung bildenden Relais abruft und einen ersten "PoU" genannten Rahmen an das Zielgerät sendet, wobei der Rahmen dazu bestimmt ist, beim Durchgang jedes Relais eine Signatur abzurufen, die ausgehend von einer Challenge und einem dem Relais eigenen Schlüssel hergestellt wird, eine Einrichtung zur Überprüfung der abgerufen Signaturen unter Verwendung der öffentlichen Schlüssel der Relais der Schaltung aufweist, wobei die Authentifizierung der Signaturen durch die Überprüfungseinrichtung das Senden von Transaktionsrahmen durch die Kommunikationseinrichtung an jedes in der Schaltung identifizierte Relais auslöst, wobei die Transaktionsrahmen mindestens die in dem Rahmen PoU enthaltenen Signaturen aufweisen und bei ihrem Empfang durch jedes Relais (3) das Senden einer Speicheranforderung eines Nutzungsnachweises an einen gemeinsamen Speicher auslösen.

16. Relaisgerät (3; 3.a; 3.b), das dazu bestimmt ist, eine Kommunikation zwischen einem Quellgerät (1) und einem Zielgerät (2) über eine Schaltung aufzubauen, die mindestens das Relais (3) aufweist und zu einem Computernetzwerk gehört, das mindestens einen gemeinsamen Speicher aufweist, wobei das Relaisgerät eine Kommunikationseinrichtung (12), die vom Quellgerät oder vom vorhergehenden Relais innerhalb der Schaltung einen "PoU" genannten Rahmen empfängt, und eine Berechnungseinrichtung (10, 11) einer Signatur ausgehend von einer Challenge und einem dem Relais eigenen Schlüssel aufweist, wobei die Kommunikationseinrichtung (12) den Rahmen PoU an das Zielgerät oder von dem in der Schaltung vorhandenen Relais in Richtung des Zielgeräts sendet, indem sie mindestens seine berechnete Signatur hinzufügt, wobei die Kommunikationseinrichtung später vom Quellgerät (1) oder vom Zielgerät (2) mindestens einen Transaktionsrahmen empfängt, der mindestens die Signaturen der im Rahmen PoU enthaltenen Relais aufweist, wobei die Kommunikationseinrichtung nach dem Empfang jeder Transaktion eine Speicheranforderung in einem gemeinsamen Speicher eines Nutzungsnachweises dieses Relais sendet, der mindestens die Signaturen der Relais der Schaltung aufweist.

17. Zielgerät (2), das dazu bestimmt ist, eine Kommunikation von einem Quellgerät (1) über eine Schaltung zu empfangen, die mindestens ein Relais aufweist und zu einem Computernetzwerk gehört, das mindestens einen gemeinsamen Speicher aufweist, wobei das Zielgerät (2) eine Kommunikationseinrichtung, die vom Quellgerät einen "PoU" genannten und mindestens eine ausgehend von einer Challenge und von einem mindestens einem Relais der Schaltung eigenen Schlüssel hergestellte Signatur enthaltenden Rahmen empfängt, eine Überprüfungseinrichtung der Signaturen des Rahmens PoU unter Verwendung der öffentlichen Schlüssel der Relais der Schaltung aufweist, wobei die Authentifizierung der Signaturen durch die Überprüfungseinrichtung das Senden durch die Kommunikationseinrichtung von Transaktionsrahmen an jedes identifizierte Relais in der Schaltung auslöst, um Nutzungsnachweise dieser Relais zu generieren, wobei die Transaktionsrahmen, die mindestens die im Rahmen PoU enthaltenen Signaturen aufweisen, konzipiert sind, das Senden eines in einem gemeinsamen Speicher gespeicherten Nutzungsnachweises durch jedes Relais auszulösen.

18. Computerprogramm, das Anweisungen zur Durchführung eines Verfahrens nach einem der Ansprüche 1 bis 11 aufweist, wenn dieses Programm von einem Prozessor ausgeführt wird.

19. Nicht-transienter, computerlesbarer Speicherträger, auf dem ein Programm gespeichert ist, das Anweisungen zur Durchführung eines Verfahrens nach einem der Ansprüche 1 bis 11 enthält.

## Claims

1. Method for generating usage data concerning a relay implemented in a computer network comprising at least one source device (1), a destination device (2), at least one shared memory and at least one relay (3) constituting a circuit for setting up a communication between the source device and the destination device, comprising the following steps implemented on the source device:
- recovery (3.9) of the identifiers of the relays constituting said circuit,
- transmission (4.2) of a so-called "PoU" frame to the destination device, each relay of the circuit adding, in passing into the PoU frame, a signature produced from a challenge and from a key specific to said relay,
- recovery (4.12), in return from said PoU frame, of at least the signatures of each relay,
- verification (4.13) of the signatures received by using the public keys of the relays of said circuit, the authentication of the signatures triggering the following steps:
- generation (8.7), from the received data, of an ordered list of identifiers of the relays used to set up said communication,
- transmission (8.10) of transaction frames to each relay identified in said list to generate proofs of use comprising at least the signatures contained in the PoU frame, the transaction frames being designed to trigger the transmission by each relay of a proof of use recorded in a shared memory.

2. Method according to Claim 2, wherein, following the recovery of the identifiers of the relays, the source device compares the received identifiers to the content of a black list of devices, the presence of a relay identifier in said black list stopping the communication between the source device and the destination device and triggering a new step of determination of a circuit not passing through the identified relay.

3. Method according to Claim 1 or 2, wherein the PoU frame is transmitted by the source device (1) at regular time intervals.

4. Method according to Claim 1 or 2, wherein the PoU frame is transmitted by the source device (1) each time the quantity of data exchanged with the destination device since the last transmission of the PoU frame exceeds a determined quantity of data.

5. Method according to any one of the preceding claims, wherein the PoU frame transmitted by the source device (1) comprises the value of the challenge used by the relays to calculate the signatures using their secret keys.

6. Method for recording usage data concerning a relay (3) implemented in a computer network comprising at least one source device (1), a destination device (2), at least one shared memory and at least one relay (3) constituting a circuit for setting up a communication between the source device and the destination device, comprising the following steps implemented on at least one relay:
- transmission of the identifier of the relay (3) to the source device,
- reception (4.2; 4.4) of a so-called "PoU" frame from the source device or from the preceding relay within the circuit,
- calculation of a signature from a challenge and from a key specific to said relay,
- addition (4.3; 4.5) of at least this signature to the PoU frame and transmission of the PoU frame to the destination device or to the relay present on the circuit in the direction of the destination device (2), depending on the position of the relay in said circuit,
- reception (9.1) of at least one transaction frame from the source device (1) or from the destination device (2), the transaction frame comprising at least the signatures of the relays contained in the PoU frame,
- transmission (9.9), following the reception of each transaction, of a request to record in a shared memory a proof of use of this relay comprising at least the signatures of the relays of the circuit.

7. Method according to Claim 6, wherein it comprises a step of reception of a so-called "PoU return" frame from the destination device containing at least all of the identifiers of the PoU frame received, a step of transmission of said received frame to the source device, and a subsequent step of reception, from the source device, of a transaction frame triggering the generation of a proof of use of the relay.

8. Method according to Claim 6 or 7, wherein the relay receives, from the shared memory, a return message indicating that the record has been correctly made, an absence of a return message during a determined time after the sending triggering the elimination of the communication circuit.

9. Method according to any one of Claims 6 to 8, wherein the identifiers of the relays comprise a public key value characteristic to each relay.

10. Method according to Claim 8, wherein the relay supplies a certificate produced from the secret key associated with its public key, said certificate being added in the PoU frame, the relay verifying the certificate issued by a relay using a cryptographic calculation involving said public key.

11. Method according to Claim 9, wherein the certificate associated with a relay is generated from a random number.

12. Method according to any one of Claims 6 to 11, wherein the PoU frame received comprises the value of the challenge used by the relay to calculate the signature using the secret key of the relay.

13. Method for generating usage data concerning a relay implemented in a computer network comprising at least one source device (1), a destination device (2), at least one shared memory and at least one relay (3) constituting a circuit for setting up a communication between the source device and the destination device, comprising the following steps implemented on the destination device:
- reception of the identifier of at least one relay (3) present on the circuit,
- reception (10.2) of a so-called "PoU" frame from the source device and containing at least one signature produced by a relay from a challenge and from a key specific to said relay,
- verification (10.4) of the signatures received by using the public keys of the relays of said circuit, the authentication of the signatures triggering the following steps:
- generation, from the received data, of an ordered list of identifiers of the relays used to set up said communication,
- transmission (10.7) of transaction frames to each relay identified in said list to generate proofs of use of these relays comprising at least the signatures contained in the PoU frame, the transaction frames being designed to trigger the transmission by each relay of a proof of use recorded in a shared memory.

14. Method according to Claim 13, further comprising a step of generation of a so-called "PoU return" data frame comprising the certificates and the identifiers of at least all the relays (3) of the circuit, and a step of transmission (10.8), to the source device, of said PoU return frame, with the signature produced using a key of the destination device.

15. Source device (1) intended to enter into communication with a destination device (2) through a circuit comprising at least one relay (3) and belonging to a computer network comprising at least one shared memory, said device (1) comprising a communication means recovering the identifiers of the relays constituting said circuit and transmitting a first so-called "PoU" frame to the destination device, said frame being intended to recover, in passing from each relay, a signature produced from a challenge and from a key specific to said relay, a means for verifying the recovered signatures by using the public keys of the relays of said circuit, the authentication of the signatures by the verification means triggering the transmission by the communication means of transaction frames to each relay identified in said circuit, said transaction frames comprising at least the signatures contained in the PoU frame and triggering, upon their reception by each relay (3), the transmission of a request to record a proof of use to a shared memory.

16. Relay device (3; 3.a; 3.b) intended to set up a communication between a source device (1) and a destination device (2) through a circuit comprising at least said relay (3) and belonging to a computer network comprising at least one shared memory, said relay device comprising a communication means (12) receiving, from the source device or from the preceding relay within the circuit, a so-called "PoU" frame, and a means (10, 11) for calculating a signature from a challenge and from a key specific to said relay, said communication means (12) transmitting, to the destination device or from the relay present in the circuit in the direction of the destination device, said PoU frame by adding to it at least its calculated signature, said communication means subsequently receiving, from the source device (1) or from the destination device (2), at least one transaction frame comprising at least the signatures of the relays contained in the PoU frame, said communication means transmitting, following the reception of each transaction, a request to record in a shared memory a proof of use of this relay comprising at least the signatures of the relays of the circuit.

17. Destination device (2) intended to receive a communication from a source device (1) through a circuit comprising at least one relay and belonging to a computer network comprising at least one shared memory, said destination device (2) comprising a communication means receiving a so-called "PoU" frame from the source device and containing at least one signature produced from a challenge and from a key specific to at least one relay of the circuit, a means for verifying the signatures of the PoU frame by using the public keys of the relays of said circuit, the authentication of the signatures by the verification means triggering the transmission by the communication means of transaction frames to each relay identified in said circuit to generate proofs of use of these relays, the transaction frames comprising at least the signatures contained in the PoU frame being designed to trigger the transmission by each relay of a proof of use recorded in a shared memory.

18. Computer program comprising instructions for the implementation of a method according to any one of Claims 1 to 11, when this program is run by a processor.

19. Computer-readable, non-transient storage medium on which is stored a program comprising instructions for the implementation of a method according to any one of Claims 1 to 11.
